# EUROPEAN PATENT APPLICATION

(11) **EP 3 133 798 A1**
(43) Date of publication of application: **22.02.2017**
(21) Application number: 16184479.0
(22) Date of filing: 17.08.2016
(51) Int. Cl.: H04L 29/12, G06F 9/455

(54) **MANAGEMENT DEVICE, CONTROL DEVICE, AND MANAGMENT METHOD**

(30) Priority: 21.08.2015 JP 2015163977
(71) Applicant: FUJITSU LIMITED, 211-8588 Kanagawa (JP)
(72) Inventor: KANO, Shinya, Kanagawa, 211-8588 (JP)
(74) Representative: Hoffmann Eitle

(57) **Abstract**

An object of the present technology is to provide a method for setting a path at a time of hierarchically managing virtual machines.

There is provided a disclosed management device in a communication system including a plurality of virtual machines that are classified into a plurality of virtual machine group, the management device including: a control unit configured to assign each address, from among intra-group addresses that are used for communications within a managed virtual machine group of the plurality of virtual machine groups, to each managed virtual machine included in the managed virtual machine group, and a communication unit configured to transmit each address assigned to each managed virtual machine included in the managed virtual machine group, wherein the control unit is further configured to: obtain from a control device, when the managed virtual machine group includes one or more specified virtual machines configured to perform address conversion for packets that pass through the managed virtual machine group, one or more addresses from among inter-group addresses that are used for communications among the plurality of virtual machine groups, and assign the obtained one or more addresses to the one or more specified virtual machine respectively.

## Description

### FIELD

The embodiments discussed herein are related to communication between devices including virtual machines and a communication system.

### BACKGROUND

A technique called network functions virtualization (NFV) attracts attention. In the NFV, functions used to be realized by network devices such as a router, a gateway, and a load balancer are implemented as application programs, and the application programs are caused to operate as virtual machines (VMs) on a server. In addition, a group of one or more virtual machines that provide a function used in communication via a network is called a virtual network function (VNF) in some cases.

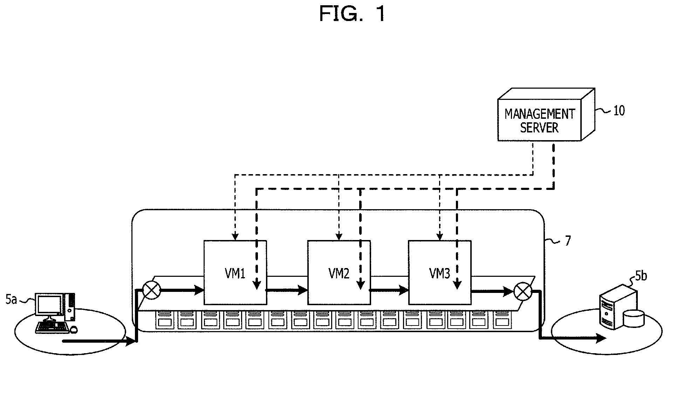

FIG. 1 is a diagram for explaining an example of a service chain 7 obtained by the network functions virtualization. Here, the service chain is a communication path routed through a network function. In the example illustrated in FIG. 1, a communication device 5a serving as a transmission source of a packet and a communication device 5b serving as a destination thereof are located at different points, and the service chain 7 used for communication between the communication device 5a and the communication device 5b includes a VM 1 to a VM 3. The management server 10 performs a path setting by requesting each of the VM 1 to VM 3 to set a routing table so that the communication between the communication device 5a and the communication device 5b becomes available by using addresses assigned to the communication device 5a and the communication device 5b. Therefore, the communication device 5a is able to transmit a packet to the communication device 5b via the service chain 7 including the VM 1 to VM 3. Note that, in FIG. 1, notification of control information from the management server 10 to each of the virtual machines is indicated by an arrow of a fine dotted line and a setting of an address from the management server 10 to each of the virtual machines is indicated by an arrow of a thick dotted line.

The NFV Industry Specification Group (ISG) in the European Telecommunications Standards Institute (ETSI) serving as a European standardization body proposes that management functions hierarchically divide and control a service chain. The management functions include a VNF manager (VNFM) and a NFV orchestrator (NFVO). The VNF manager manages addresses of virtual machines in a VNF (may be referred to as intra-group addresses) and performs control for communication of virtual machines included in the VNF serving a management target. On the other hand, the NFV orchestrator sets a communication path for each of VNFs and performs assignment of addresses used at a time of performing communication between VNFs (may be referred to as inter-group addresses), and so forth, thereby controlling an entire network.

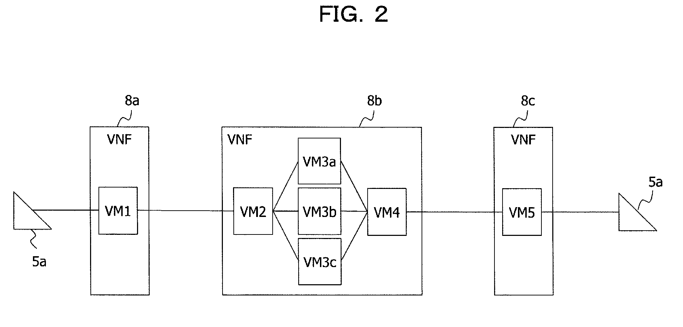

FIG. 2 is a diagram for explaining an example of a hierarchically managed service chain. In a case where a service chain is hierarchically managed, a VNF is a group of one or more virtual machines combined in order to perform predetermined processing. The number of VNFs in a service chain or the number of virtual machines included in each of the VNFs are arbitrary. The service chain illustrated in FIG. 2 includes a VNF 8a to a VNF 8c. The VNF 8a includes a virtual machine VM 1, and the VNF 8c includes a virtual machine VM 5. Furthermore, the VNF 8b includes five virtual machines of virtual machines VM 2, VM 3a, VM 3b, VM 3c, and VM 4. In this case where, the NFV orchestrator performs assignment of addresses to each of the VNFs and so forth. Accordingly, the NFV orchestrator determines addresses used for transmission and reception of packets between the VNF 8a, the VNF 8b, and the VNF 8c. The NFV orchestrator notifies a VNF manager of addresses determined for each of the VNFs, the VNF manager controlling communication based on the relevant VNF. Then, the VNF manager assigns an address, given notice of by the NFV orchestrator, to a virtual machine that communicates with a virtual machine in another VNF. Upon being notified of two addresses by the NFV orchestrator, a VNF manager whose control target is, for example, the VNF 8b sets one of the two addresses in a port that is used for communication with a device, not included in the VNF 8b, and that is included in the VM 2. Furthermore, the VNF manager sets the other of the two addresses, given notice of by the NFV orchestrator, in a port that is used for communication with a device, not included in the VNF 8b, and that is included in the VM 4. In the same way, a VNF manager that processes the VNF 8a sets, in the VM 1, an address given notice of by the NFV orchestrator, and a VNF manager that processes the VNF 8c sets, in the VM 5, an address given notice of by the NFV orchestrator. Furthermore, a VNF manager that manages a VNF including virtual machines in such a manner as the VNF 8b assigns an address to a port, to which no address given notice of by the NFV orchestrator is assigned, and performs a path setting in each of the virtual machines.

As a related art, there is proposed a method for determining the number of execution units realized by a server or the like and the types thereof so that performances of VNFs that operate in the execution units satisfy evaluation indexes requested for the VNFs (Japanese Laid-open Patent Publication No. 2015-56182, U.S. Patent Application Publication No. 2015/0082308, or the like). There is proposed a data processing system including chain managers to control processing based on objects to which identifiers are assigned, a directory storing therein service information executable by objects, and a root chain manager (Japanese Laid-open Patent Publication No. 2004-157713, U.S. Patent Application Publication No. 2004/0133678, or the like). The root chain manager identifies services executable by objects associated with acquired identifiers and circulates chain tokens among chain managers corresponding to objects that provide the identified services, thereby providing various services.

### SUMMARY

TECHNICAL PROBLEM

In a system in which virtual machines are divided into groups and a service chain is hierarchically controlled, addresses used for communication between groups and addresses used for communication within each of the groups are separately set. However, it is not sufficiently considered whether there is a case where address management between groups and address management within each of the groups are separately performed, thereby causing difficulty in performing a path setting for relaying packets. In addition, there is proposed no method for setting, in such a case, a path to a virtual machine in order to relay the packets.

An object of the present technology is to provide a method for setting a path at a time of hierarchically managing virtual machines.

### SOLUTION TO PROBLEM

In order to solve the problems described above and accomplish the object, there is provided a disclosed management device in a communication system including a plurality of virtual machines that are classified into a plurality of virtual machine group, the management device including: a control unit configured to assign each address, from among intra-group addresses that are used for communications within a managed virtual machine group of the plurality of virtual machine groups, to each managed virtual machine included in the managed virtual machine group, and a communication unit configured to transmit each address assigned to each managed virtual machine included in the managed virtual machine group, wherein the control unit is further configured to: obtain from a control device, when the managed virtual machine group includes one or more specified virtual machines configured to perform address conversion for packets that pass through the managed virtual machine group, one or more addresses from among inter-group addresses that are used for communications among the plurality of virtual machine groups, and assign the obtained one or more addresses to the one or more specified virtual machine respectively.

### ADVANTAGEOUS EFFECT OF INVENTION

With the disclosed management device, it is possible to set a path at a time of hierarchically managing virtual machines.

### BRIEF DESCRIPTION OF DRAWINGS

FIG. 1 is a diagram for explaining an example of a service chain obtained by network functions virtualization;
FIG. 2 is a diagram for explaining an example of a hierarchically managed service chain;
FIG. 3 is a diagram for explaining an example of assignment of addresses based on an NFV orchestrator;
FIG. 4 is a diagram for explaining an example of assignment of addresses based on a VNF manager;
FIG. 5 is a diagram for explaining an example of a service chain;
FIG. 6 is a diagram for explaining an example of assignment of addresses based on the NFV orchestrator;
FIG. 7 is a diagram for explaining an example of assignment of addresses based on a VNF manager;
FIG. 8 is a flowchart for explaining an example of a communication method according to an embodiment;
FIG. 9 is a diagram for explaining an example of a configuration of a control device;
FIG. 10 is a diagram for explaining an example of a configuration of a management device;
FIG. 11 is a diagram for explaining an example of hardware configurations of the control device and the management device;
FIG. 12 is a diagram for explaining kinds of address translation;
FIG. 13 is a diagram for explaining an example of a service chain request;
FIG. 14 is a diagram for explaining an example of a topology table;
FIG. 15 is a diagram for explaining an example of an address translation type table;
FIG. 16 is a diagram for explaining an example of a determination method for address translation types;
FIG. 17 is a flowchart for explaining an example of a determination method for an address translation type;
FIG. 18 is a diagram for explaining an example of a method for assignment of addresses;
FIG. 19 is a flowchart for explaining an example of a method for assignment of addresses;
FIG. 20 is a diagram for explaining an example of a setting method for a path;
FIG. 21 is a flowchart for explaining an example of a determination method for path information;
FIG. 22 is a flowchart for explaining an example of a determination method for path information;
FIG. 23 is a diagram for explaining an example of a method for assignment of addresses; and
FIG. 24 is a flowchart for explaining an example of a method for assignment of addresses.

### DESCRIPTION OF EMBODIMENTS

### Consideration of Whether Failure Occurs in Communication

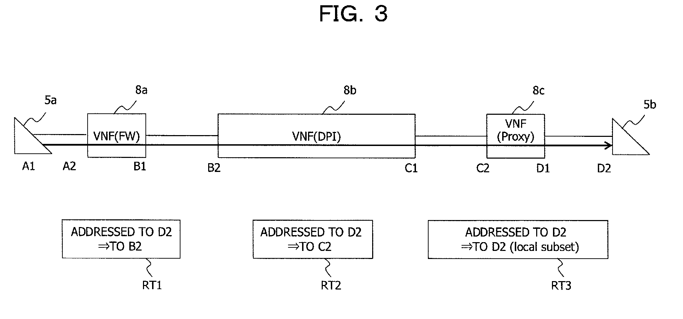

FIG. 3 is a diagram for explaining an example of assignment of addresses based on an NFV orchestrator. In the example of FIG. 3, a service chain 7 used for transmitting a packet from the communication device 5a to the communication device 5b includes the VNF 8a to the VNF 8c. It is assumed that an address of the communication device 5a is "A1" and an address of the communication device 5b is "D2". The VNF 8a operates as a firewall (FW), the VNF 8b operates as a deep packet inspection (DPI), and the VNF 8c operates as a proxy.

The NFV orchestrator assigns, to each of the VNFs 8 included in the service chain 7, addresses used in a case where one of the VNFs communicates with another one of the VNFs or one of the communication devices 5 not included in the relevant VNF. In FIG. 3, the NFV orchestrator assigns "A2" and "B1" to the VNF 8a, assigns "B2" and "C1" to the VNF 8b, and assigns "C2" and "D1" to the VNF 8c, as addresses. Furthermore, the NFV orchestrator determines path information in units of the VNFs 8. The NFV orchestrator determines that, for example, the VNF 8a transfers, to "B2", a packet addressed to "D2", and the NFV orchestrator notifies a VNF manager, which manages the VNF 8a, of the addresses assigned to the VNF 8a and information indicated by RT1. The NFV orchestrator determines that the VNF 8b transfers, to "C2", the packet addressed to "D2", and the NFV orchestrator notifies a VNF manager, which manages the VNF 8b, of the addresses assigned to the VNF 8b and information indicated by RT2. Furthermore, the NFV orchestrator determines that the VNF 8c transfers the packet addressed to "D2" to a local subnet to which "D2" belongs, and the NFV orchestrator notifies a VNF manager, which manages the VNF 8c, of the addresses assigned to the VNF 8c and information indicated by RT3.

As illustrated in, for example, FIG. 2, it is assumed that the VNF 8a and the VNF 8c each include one virtual machine and the VNF 8b includes five virtual machines. In this case, in each of the VNF 8a and the VNF 8c, an address given notice of by the NFV orchestrator is assigned to each of an input port and an output port of a packet to be transmitted and received via the service chain 7.

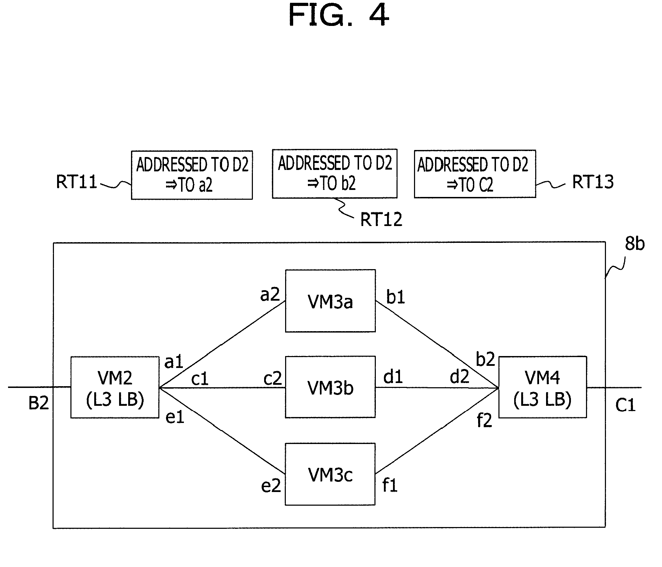

FIG. 4 is a diagram for explaining an example of assignment of addresses based on a VNF manager. It is assumed that the VNF 8b operates as the DPI, as described in FIG. 3. In the example of FIG. 4, it is assumed that the VNF 8b includes the five virtual machines, the VM 2 and the VM 4 each operate as a load balancer (L3LB), and the VM 3a to the VM 3c each operate as the DPI. The corresponding VNF manager assigns addresses used for transmission and reception of packets between the virtual machines in the VNF 8b. In the example of FIG. 4, "B2", "a1", "c1", and "e1" are assigned to the VM 2, and "C1", "b2", "d2", and "f2" are assigned to the VM 4. Furthermore, "a2" and "b1" are assigned to the VM 3a, "c2" and "d1" are assigned to the VM 3b, and "e2" and "f1" are assigned to the VM 3c. The corresponding VNF manager determines path information to be used for communication within the VNF 8b and notifies the virtual machines of the determined path information. The corresponding VNF manager determines that, for example, the VM 2 transfers, to "a2", a packet addressed to "D2" and notifies the VM 2 of information indicated by RT11. The corresponding VNF manager determines that the VM 3a transfers, to "b2", the packet addressed to "D2" and notifies the VM 3a of information indicated by RT12. Furthermore, the corresponding VNF manager determines that the VM 4 transfers, to "C2", the packet addressed to "D2" and notifies the VM 4 of information indicated by RT13.

Since, in the VNF 8b, the VM 3a to the VM 3c each operate as the DPI, none of the VM 3a to the VM 3c translates address information of a received packet. Therefore, in a case where the path information of RT11 to RT13 is used, the packet addressed to "D2" is transferred to a destination via the VM 2, the VM 3a, and the VM 4.

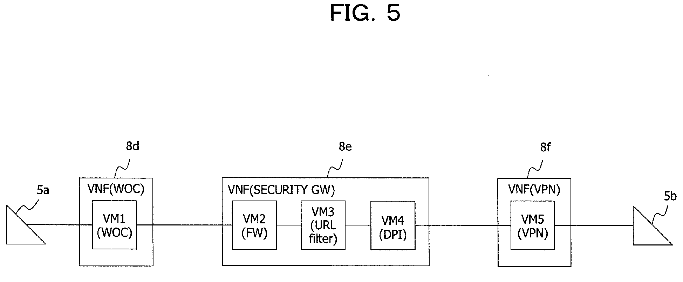

FIG. 5 is a diagram for explaining an example of a service chain. Hereinafter, with reference to FIG. 5 to FIG. 7, there will be described a case where address translation is performed in a virtual machine to which no address, of which the corresponding VNF manager is notified by the NFV orchestrator, is assigned.

The service chain illustrated in FIG. 5 includes VNFs 8d to 8f. It is assumed that the VNF 8d operates as a WAN accelerator (wide area network optimization controller (WOC)) and the VNF 8e operates as a security gateway. Furthermore, the VNF 8f provides a virtual private network (VPN). The VNF 8d includes the VM 1, the VNF 8e includes the VM 2 to the VM 4, and the VNF 8f includes the VM 5. In addition, it is assumed that, in the VNF 8e, the VM 2 operates as a firewall, the VM 3 operates as a uniform resource locator (URL) filter, and the VM 4 operates as the DPI. Here, at a time of operating as the URL filter, the VM 3 terminates received packets and changes information of a destination or the like of a packet serving as a processing target, by using information within a payload, or the like. In the following example, it is assumed that the VM 3 translates a destination address of a packet addressed to "B2" to "D2".

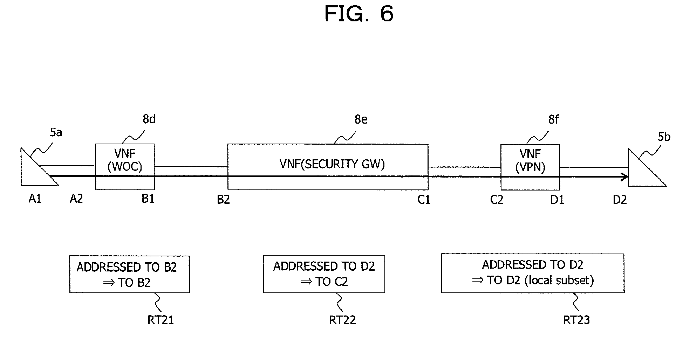

FIG. 6 is a diagram for explaining an example of assignment of addresses based on the NFV orchestrator. In FIG. 6, the NFV orchestrator assigns "A2" and "B1" to the VNF 8d, assigns "B2" and "C1" to the VNF 8e, and assigns "C2" and "D1" to the VNF 8f, as addresses. In addition, the NFV orchestrator notifies the VNF managers to manage addresses in the individual VNFs 8 of the assigned addresses. The NFV orchestrator determines pieces of path information indicated by RT21 to RT23 and notifies the VNF managers of the respective pieces of path information, the VNF managers managing the respective VNFs 8 in which the respective pieces of path information are used. Therefore, the VNF manager of the VNF 8d is notified that the packet addressed to "B2" is to be transferred to "B2". In addition, the VNF manager of the VNF 8e is notified that the packet addressed to "D2" is to be transferred to "C2", and the VNF manager of the VNF 8f is notified that the packet addressed to "D2" is to be transferred to the local subnet to which "D2" belongs.

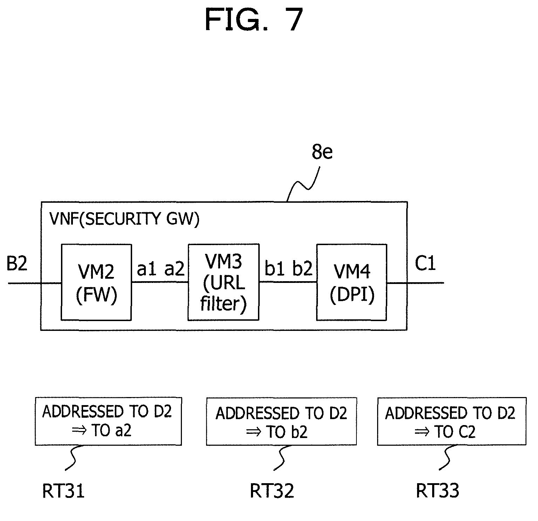

FIG. 7 is a diagram for explaining an example of assignment of addresses in the VNF 8e, based on the corresponding VNF manager. The corresponding VNF manager assigns addresses used for transmission and reception of packets between the virtual machines in the VNF 8e. In the example of FIG. 7, "B2" and "a1" are assigned to the VM 2, "a2" and "b1" are assigned to the V3, and "b2" and "C1" are assigned to the VM 4. Furthermore, since being notified by the NFV orchestrator that the packet addressed to "D2" is to be transferred to "C2", the corresponding VNF manager determines a transfer path of the packet addressed to "D2" as indicated by RT31 to RT33 and notifies the virtual machines, which use the determined transfer path, of the transfer path. Therefore, in the VM 2, as indicated by RT31, it is memorized that the packet addressed to "D2" is to be transferred to "a2". In the same way, in the VM 3, as indicated by RT32, it is memorized that the packet addressed to "D2" is to be transferred to "b2", and in the VM 4, as indicated by RT33, it is memorized that the packet addressed to "D2" is to be transferred to "C2". On the other hand, since "B2" is an address set at a boundary of the VNF 8e itself, the corresponding VNF manager does not set a transfer path of the packet addressed to "B2".

Here, it is assumed that the communication device 5a tries to transmit a packet to the communication device 5b via the service chain 7 illustrated in FIG. 5. In the service chain 7 illustrated in FIG. 5, since address translation is performed in the VM 3 in the VNF 8e, the communication device 5a is preliminarily notified of "B2", as a destination address of a packet addressed to the communication device 5b. Therefore, the communication device 5a sets, to "B2", a destination address of a packet including data to be sent to the communication device 5b and transfers the packet to the VNF 8d. Since a destination address in a reception packet is "B2", the VM 1 in the VNF 8d transfers the packet to the VNF 8e in accordance with RT21 (FIG. 6). Since, in the VNF 8e, the address of "B2" is assigned to the VM 2, the packet is not transferred in case of reaching the VM 2. However, since not terminating the packet, the VM 2 does not translate the packet addressed to "B2" to being addressed to "D2". As a result, packets addressed to the communication device 5a and the communication device 5b are discarded, and communication between the communication device 5a and the communication device 5b fails.

As described with reference to FIG. 3 to FIG. 7, in a case where addresses within the service chain 7 are hierarchically managed, if a destination address of a packet serving as a processing target of a virtual machine to perform address translation is not assigned to the relevant virtual machine, there is a problem that a failure in communication occurs. Note that the above-mentioned problem is liable to occur in an arbitrary system in which virtual machines are divided into groups and addresses used for communication between the groups and addresses used for communication within each of the groups are separately assigned.

### Example of Communication Method

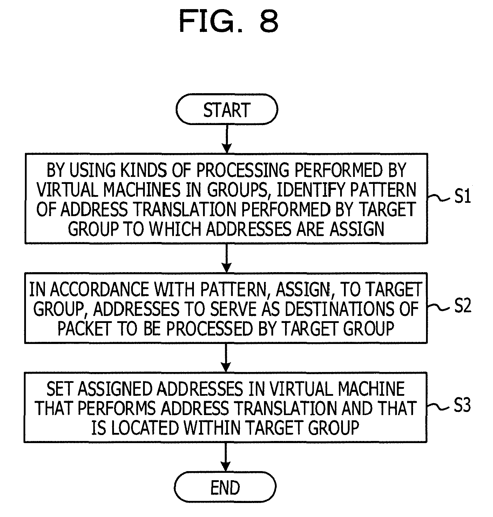

FIG. 8 is a flowchart for explaining an example of a communication method performed in a system according to an embodiment. It is assumed that, in the system according to an embodiment, a control device 20 controls assignment of addresses used for communication between groups and a corresponding management device 50 controls addresses used for communication within each of the groups.

By using kinds of processing performed by virtual machines in the groups, the control device 20 identifies a pattern of address translation performed by a group (target group) serving as a target to which addresses are assigned (step S1). In accordance with the pattern of address translation of the target group, the control device 20 assigns, to the target group, addresses to serve as destinations of a packet to be processed by the target group (step S2). In other words, in a case where a destination address or a transmission source address of a packet that passes through the target group is changed by the target group, addresses to be used as destinations of the packet to pass through the target group are assigned. Note that addresses are assigned to the target group so that the number of the addresses is sufficient for making available communication in both a direction from a transmission source in the service chain 7 to a destination thereof and a direction from the destination in the service chain 7 to the transmission source thereof. At this time, path calculation is performed by the control device 20 so that addresses assigned by the control device 20 are available for communication between the groups. The control device 20 notifies the corresponding management device 50 of path information to be used by the target group, along with the addresses assigned to the target group, the corresponding management device 50 managing the addresses used for communication within the target group. The corresponding management device 50 assigns addresses assigned by the control device 20 to a virtual machine that performs processing accompanied by address translation and that is located within the target group (step S3).

Note that the communication method illustrated in FIG. 8 is an example and, for example, the control device 20 may assign, for each of the groups, addresses to be used in a virtual machine to perform address translation, without identifying a pattern of address translation in the corresponding group. In this case, the management device 50 of each of the groups assigns one of addresses given notice of by the control device 20 to a receiving port of a virtual machine that receives, from a device not included in the same group, a packet whose destination address is to serve as a target of address translation. Furthermore, the corresponding management device 50 assigns an address given notice of by the control device 20 to a transmitting port of a virtual machine that transmits, to a device not included in the same group, a packet whose transmission source address is to be changed. Furthermore, at a time of assignment of addresses, the control device 20 may use arrangement of virtual machines in the corresponding VNF 8, for example, a location of a virtual machine to perform address translation, such as a boundary.

In this way, in the method according to an embodiment, since assigning addresses given notice of by the control device 20 to a virtual terminal to perform address translation processing, the corresponding management device 50 is able to avoid a failure in communication even if the control device 20 and the corresponding management device 50 hierarchically manage addresses.

### Device Configuration

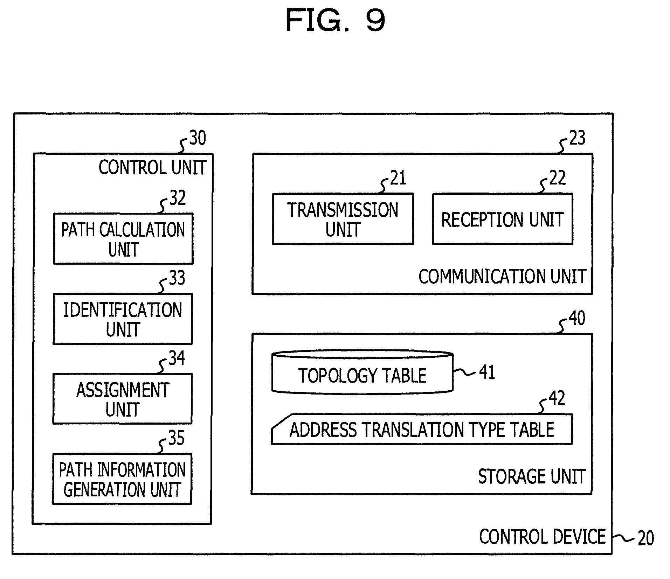

FIG. 9 is a diagram for explaining an example of a configuration of the control device 20. The control device 20 includes a communication unit 23, a control unit 30, and a storage unit 40. The communication unit 23 includes a transmission unit 21 and a reception unit 22. The control unit 30 includes a path calculation unit 32, an identification unit 33, an assignment unit 34, and a path information generation unit 35. The storage unit 40 stores therein a topology table 41 and an address translation type table 42.

The transmission unit 21 transmits packets to other devices such as the management devices 50. The reception unit 22 receives packets from other devices such as the management devices 50. Upon acquiring a request to generate a service chain via the reception unit 22, the path calculation unit 32 calculates a packet transfer path to be applied to the service chain 7 requested by the generation request. Here, the packet transfer path includes a communication path between the communication device 5 serving as a transmission source and one of the VNFs 8, a communication path between the VNFs 8, and a communication path between one of the VNFs 8 and the communication device 5 serving as a destination. The path calculation unit 32 uses the topology table 41 at a time of calculating the packet transfer path. In the topology table 41, there are recorded topology information of an entire network and information of devices that are coupled to the communication device 5 serving as a transmission source and the communication device 5 serving as a destination and that are included in the network.

From patterns of address translation accompanied by processing operations in respective virtual machines included in the VNF 8 serving as a processing target, the identification unit 33 identifies a pattern of address translation in the entire corresponding VNF 8. By using information indicating the pattern of address translation identified by the identification unit 33, the assignment unit 34 assigns addresses to the VNF 8 serving as a processing target. Based on whether a destination address and a transmission source address of a packet change between before and after the packet is routed through one of the VNFs 8, the address translation type table 42 registers therein an address translation type of the corresponding VNF 8. An example of the address translation type table 42 will be described later.

By using the packet transfer path, information registered in the address translation type table 42, addresses assigned to the individual VNFs 8, and so forth, the path information generation unit 35 generates path information of which a relay device and the management devices 50 on the packet transfer path are to be notified.

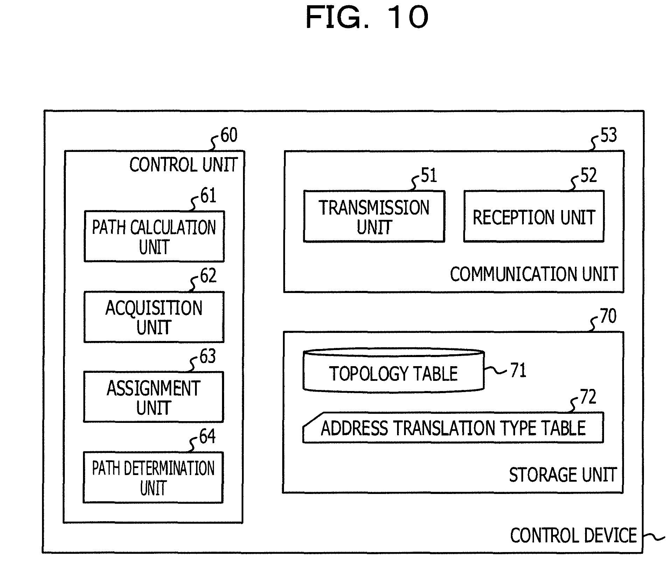

FIG. 10 is a diagram for explaining an example of configurations of the management devices 50. The management devices 50 include a communication unit 53, a control unit 60, and a storage unit 70. The communication unit 53 includes a transmission unit 51 and a reception unit 52. The control unit 60 includes a path calculation unit 61, an acquisition unit 62, an assignment unit 63, and a path determination unit 64. The storage unit 70 stores therein a topology table 71 and an address translation type table 72.

The transmission unit 51 transmits packets to other devices such as the control device 20. The reception unit 52 receives packets from other devices such as the control device 20. By using the topology table 71, the path calculation unit 61 calculates a communication path that is located within the VNF 8 serving as a management target and that is included in the packet transfer path. By using a packet received from the control device 20 via the reception unit 52, the acquisition unit 62 acquires addresses assigned to the VNF 8 serving as a management target. The assignment unit 63 assigns addresses given notice of by the control device 20 to a virtual machine to serve as a boundary of the corresponding VNF 8 and a virtual machine to perform processing accompanied by address translation. By using a calculation result obtained by the path calculation unit 61, the address translation type table 72, and a result of assignment of addresses, the path determination unit 64 determines a transfer path in virtual machines in the corresponding VNF 8.

In the topology table 71, there are recorded topology information of an entire network and information of devices that are coupled to the communication device 5 serving as a transmission source and the communication device 5 serving as a destination and that are included in the network. For processing performed by each of virtual machines, based on whether a destination address and a transmission source address of a packet change between before and after the packet is routed through the relevant virtual machine, the address translation type table 72 registers therein a pattern of address translation performed by the relevant virtual machine.

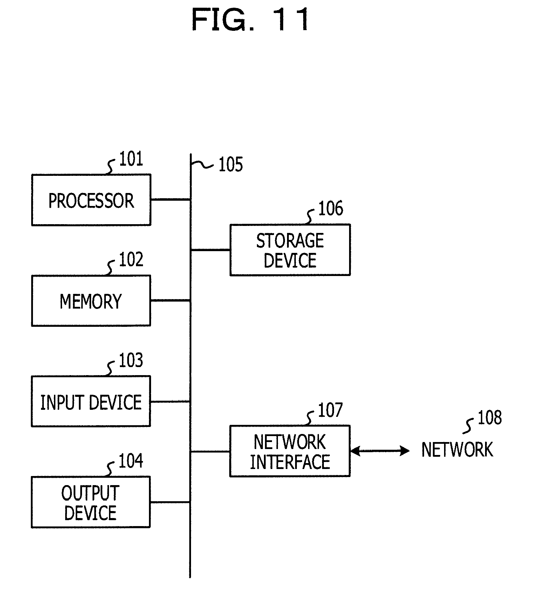

FIG. 11 is a diagram for explaining an example of hardware configurations of the control device 20 and the management devices 50. The control device 20 and the management devices 50 each include a processor 101, a memory 102, a bus 105, a storage device 106, and a network interface 107. Furthermore, the control device 20 and the management devices 50 may each optionally include an input device 103 and an output device 104. The control device 20 and the management devices 50 are each realized by, for example, a computer or the like. In addition, the control device 20 and the management devices 50 may be realized by the same computer or may be realized by respective computers different from one another.

The processor 101 may be an arbitrary processing circuit including a central processing unit (CPU). The processor 101 uses the memory 102 as a working memory and executes a program, thereby performing various processing operations. The memory 102 includes a random access memory (RAM) and further includes a non-volatile memory such as a read only memory (ROM). The memory 102 and the storage device 106 are used for storing data used for processing in the program or the processor 101. The network interface 107 is used for communication with another device, performed via a network 108. The bus 105 couples the processor 101, the memory 102, the input device 103, the output device 104, the storage device 106, and the network interface 107 so that the processor 101, the memory 102, the input device 103, the output device 104, the storage device 106, and the network interface 107 are able to input and output pieces of data from and to one another. The input device 103 is realized as, for example, a button, a keyboard, or a mouse, and the output device 104 is realized as a display or the like.

In the control device 20, the processor 101 operates as the control unit 30, and the memory 102 and the storage device 106 operate as the storage unit 40. The network interface 107 realizes the communication unit 23. In each of the management devices 50, the processor 101 operates as the control unit 60, and the memory 102 and the storage device 106 operate as the storage unit 70. The network interface 107 realizes the communication unit 53.

### Embodiment

Before describing a procedure of assignment of addresses in a communication system, classification of kinds of address translation will be described.

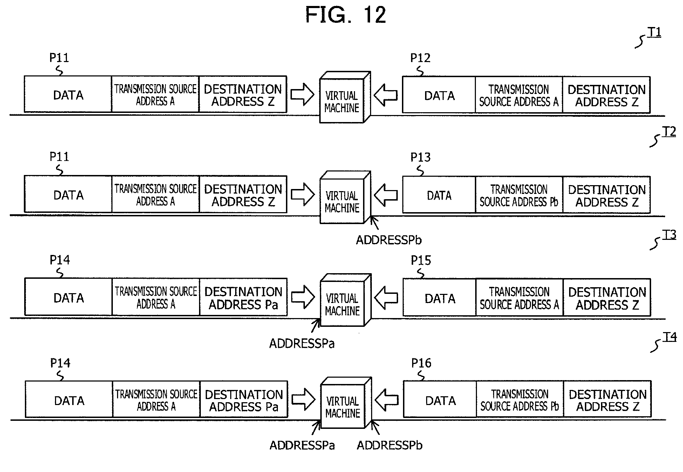

FIG. 12 is a diagram for explaining kinds of address translation. In a method according to an embodiment, kinds of address translation processing generated by processing operations performed by individual virtual machines are classified into Type 1 to Type 4. The corresponding virtual machine VM includes a receiving-side interface IFa to receive a packet from another device and a transmitting-side interface IFb to transmit a packet to another device. Here, it is assumed that an address of "Pa" is assigned to the receiving-side interface IFa and an address of "Pb" is assigned to the transmitting-side interface IFb. Hereinafter, in order to make it easier to read, a virtual machine to perform processing accompanied by a kind of address translation is associated with the kind of address translation. It is assumed that a virtual machine to perform processing accompanied by, for example, Type 1 address translation is described as a Type 1 virtual machine in some cases. In the same way, a virtual machine to perform processing accompanied by Type 2 address translation is described as a Type 2 virtual machine, and a virtual machine to perform processing accompanied by Type 3 address translation is described as a Type 3 virtual machine. Furthermore, a virtual machine to perform processing accompanied by Type 4 address translation is described as a Type 4 virtual machine.

"T1" in FIG. 12 illustrates examples of a reception packet and a transmission packet of the Type 1 virtual machine. Since transferring the reception packet to a destination without terminating the reception packet, the Type 1 virtual machine does not change address information within the reception packet. Therefore, the Type 1 virtual machine is treated as a transparent type device by each of a device serving as a transmission source of the packet and a device serving as a destination of the packet. It is assumed that the Type 1 virtual machine receives, via the receiving-side interface IFa, a packet P11 in which a destination address and a transmission source address are set to, for example, "Z" and "A", respectively. In this case, the corresponding virtual machine transmits, from the transmitting-side interface IFb, a packet P12 in which a destination address and a transmission source address are set to "Z" and "A", respectively.

Examples of the Type 1 virtual machine include virtual machines that operate as a firewall, a DPI, and an intrusion detection system (IDS). Note that a virtual machine that operates as the IDS monitors packets transmitted and received in a network and senses an unauthorized access.

"T2" in FIG. 12 illustrates examples of a reception packet and a transmission packet of the Type 2 virtual machine. At a time of processing of the reception packet, the Type 2 virtual machine changes a transmission source address of the reception packet and transmits the packet whose address is changed. It is assumed that the Type 2 virtual machine receives, via the receiving-side interface IFa, the packet P11 in which the destination address and the transmission source address are set to, for example, "Z" and "A", respectively. In this case, the corresponding virtual machine translates the transmission source address of the packet serving as a processing target to the address of "Pb" assigned to the transmitting-side interface IFb of the corresponding virtual machine. The corresponding virtual machine transmits, from the transmitting-side interface IFb, a packet P13 in which a destination address and a transmission source address are set to "Z" and "Pb", respectively.

Examples of the Type 2 virtual machine include virtual machines that operate as a transparent type proxy, a transparent type cache, a source based network address translation (SNAT), and a source based network address and port translation (SNAPT). A virtual machine that operates as a cache (Web cache) temporarily stores therein (caches) Web data. In addition, in a case of being accessed by the corresponding communication device 5 again, the virtual machine that operates as the cache (Web cache) transmits the stored Web data to the corresponding communication device 5. A virtual machine that operates as the SNAT translates an IP address of a transmission source of a packet serving as a transfer target to a specified IP address. The specified IP address is, for example, an IP address of the transmitting-side interface IFb, or the like. A virtual machine that operates as the SNAPT translates a port number of a transmission source of a packet in addition to translation of an address.

"T3" in FIG. 12 illustrates examples of a reception packet and a transmission packet of the Type 3 virtual machine. At a time of processing of the reception packet, the Type 3 virtual machine changes a destination address of the reception packet and transmits the packet whose address is changed. It is assumed that the Type 3 virtual machine receives, via the receiving-side interface IFa, a packet P14 in which a destination address and a transmission source address are set to, for example, "Pa" and "A", respectively. In this case, since the reception packet is addressed to the device itself, the corresponding virtual machine performs termination processing of the packet and identifies a transfer destination of data within the packet by arbitrarily using the data or the like. Furthermore, the corresponding virtual machine sets an address assigned to the identified transfer destination, as a destination address of the packet serving as a processing target. In the example of "T3", the address assigned to the transfer destination is "Z". Therefore, the corresponding virtual machine transmits, from the transmitting-side interface IFb, a packet P15 in which a destination address and a transmission source address are set to "Z" and "A", respectively.

Examples of the Type 3 virtual machine include a virtual machine that operates as a destination based network address translation (DNAT). The virtual machine that operates as the DNAT translates an IP address of a destination of a received packet.

"T4" in FIG. 12 illustrates examples of a reception packet and a transmission packet of the Type 4 virtual machine. At a time of processing of the reception packet, the Type 4 virtual machine changes both a destination address and a transmission source address of the reception packet and transmits the packet whose addresses are changed. It is assumed that the Type 4 virtual machine receives the packet P14 in which the destination address and the transmission source address are set to, for example, "Pa" and "A", respectively. In this case, since the reception packet is addressed to the device itself, the corresponding virtual machine performs termination processing of the packet and identifies a transfer destination of data within the packet by arbitrarily using the data or the like. By using an identified result, the corresponding virtual machine changes the destination address of the reception packet. In the example of "T4", it is assumed that the address assigned to the transfer destination is "Z". Furthermore, the corresponding virtual machine translates the transmission source address to the address of "Pb" assigned to the transmitting-side interface IFb. Accordingly, the corresponding virtual machine transmits, from the transmitting-side interface IFb, a packet P16 in which a destination address and a transmission source address are set to "Z" and "Pb", respectively. Examples of the Type 4 virtual machine include virtual machines that operate as a non-transparent proxy and a non-transparent cache.

Hereinafter, processing performed in an embodiment will be described while divided into "start of a setting of a service chain and identification processing of kinds of address translation", "assignment of addresses in the control device 20", "path calculation in the control device 20", and "processing in the management device 50".

(1) Start of Setting of Service Chain and Identification Processing of Kinds of Address Translation

A service chain request is transmitted to the control device 20, thereby starting a setting of the new service chain 7. The service chain request is transmitted to the control device 20 by the communication device 5 of one of an operator, a network administrator, and a user who uses a network service.

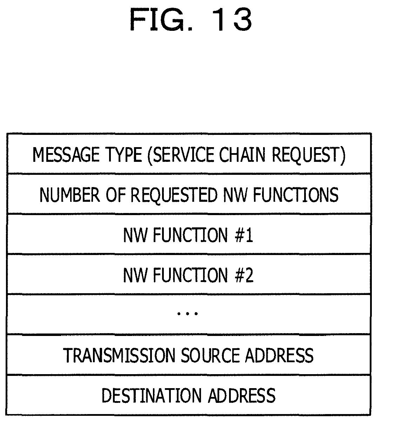

FIG. 13 is a diagram for explaining an example of the service chain request. The service chain request includes a message type, the number of the VNFs 8 (the number of requested NW functions) included in the service chain 7, detailed pieces of information of the respective VNFs 8 included in the service chain 7, a transmission source address, and a destination address. In the service chain request, the message type is set as arbitrary information for enabling the control device 20 to recognize that start of a setting of the service chain 7 is requested. The transmission source address is an address assigned to the communication device 5 serving as a transmission source of a packet to be transmitted by the service chain 7. The destination address is an address assigned to the communication device 5 serving as a final destination of the packet to be transmitted by the service chain 7. The detailed information of the VNFs 8 includes information such as kinds of functions (NW functions) provided by the individual VNFs 8.

Upon receiving the service chain request, the reception unit 22 in the control device 20 outputs the service chain request to the path calculation unit 32. By using the service chain request, the path calculation unit 32 calculates a packet transfer path. Note that it is assumed that the service chain request is used for start-up processing of virtual machines within the VNFs 8 and the start-up processing of virtual machines in the packet transfer path and so forth are performed in parallel with calculation of the packet transfer path performed in the control device 20. The start-up of virtual machines may be performed by a device such as a cloud management device (not illustrated) in a network, different from the control device 20 or the management devices 50, or may be performed by the control device 20 or the management devices 50. Note that the cloud management device is realized by a virtualized infrastructure management (VIM) within an ETSI NFV architecture or the like. Furthermore, information of the topology table 41 and the topology table 71 is updated in accordance with the start-up of virtual machines.

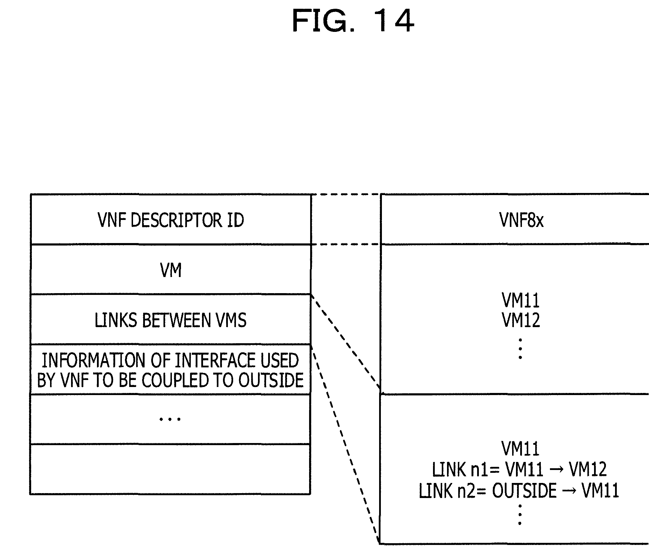

FIG. 14 is a diagram for explaining an example of the topology table 41. Each of the topology table 41 and the topology table 71 is arbitrary information capable of identifying the VNFs 8 and locations of virtual machines within the VNFs 8. The example of FIG. 14 illustrates information that is related to one of the VNFs 8 and that is included in the topology table 41. The topology table includes an identifier of a VNF, identifiers and processing types of respective virtual machines included in the relevant VNF, link information between virtual machines, and information of an interface used in a case where the relevant VNF 8 communicates with a device outside the relevant VNF. In the example of, for example, FIG. 14, a VNF 8x incudes virtual machines including "VM 11", "VM 12", and so forth. In addition, the type of processing performed by each of virtual machines is registered in the topology table 41 while associated with the identifier of the relevant virtual machine. Furthermore, information of links used for communication by virtual machines within the VNF 8x is included in the topology table 41. Links of, for example, the VM 11 are links Ln1 and Ln2. The link Ln1 is used for transferring a packet from the virtual machine VM 11 to the virtual machine VM 12, and the link Ln2 is used for transferring a packet from the outside of the VNF 8x to the virtual machine VM 11. In the information of an interface used in a case where the corresponding VNF communicates with the external device, pieces of information such as addresses assigned to individual interfaces are recorded while associated with the individual interfaces. Note that since, at this point of time, the control device 20 does not yet perform assignment of addresses, no address is recorded. By using a calculation result based on the path calculation unit 32, the topology table 41, and the address translation type table 42, the identification unit 33 in the control device 20 determines an address translation type for each of the VNFs 8.

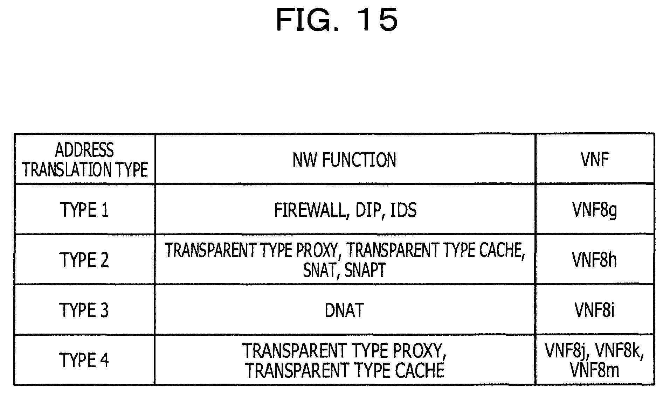

FIG. 15 is a diagram for explaining an example of the address translation type table 42. Note that, as illustrated in FIG. 15, each of the address translation type table 42 and the address translation type table 72 associates the translation type of an address, a network function, and an identifier of one of the VNFs with one another. The translation type of an address is one of Type 1 to Type 4 described with reference to FIG. 12. The field of the network function indicates examples of the VNFs 8 to perform address translation operations of associated types, which are included in network functions likely to be included in the service chain 7. In the address translation type table 42, the field of the VNF identifier includes no VNF identifier before the identification unit 33 identifies the kind of address translation performed by each of the VNFs 8.

First, by using the kinds of processing operations performed by individual virtual machines included in each of the VNFs 8 and the address translation type table 42, the identification unit 33 in the control device 20 identifies the kinds of address translation performed by individual virtual machines. The identification unit 33 searches, for example, the field of the network function in the address translation type table 42 by using, as a key, processing of each of virtual machines, and the identification unit 33 determines a type associated with a hit entry, as an address translation type based on processing in the relevant virtual machine.

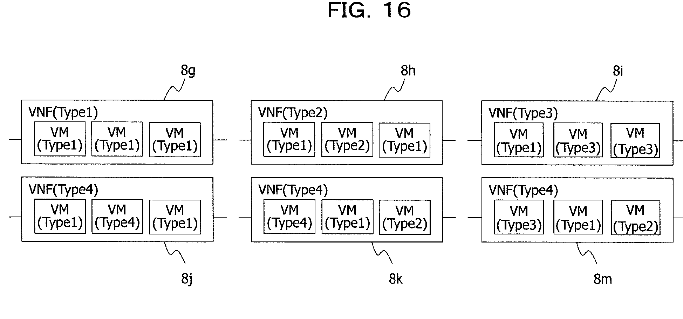

FIG. 16 illustrates examples of results of identifying, for each of a VNF 8g, a VNF 8h, a VNF 8i, a VNF 8j, a VNF 8k, and a VNF 8m, kinds of address translation accompanied by processing operations performed by respective virtual machines included in the relevant VNF 8. If identification of address translation types of respective virtual machines finishes, the identification unit 33 identifies address translation types of the respective VNFs 8. In a case where all virtual machines included in the corresponding VNF 8 each perform address translation classified into Type 1, the identification unit 33 determines that address translation performed by the corresponding VNF 8 is Type 1. An address translation type accompanied by processing in each of virtual machines included in, for example, the VNF 8g in FIG. 16 is Type 1. Therefore, the identification unit 33 determines that address translation performed by the VNF 8g is Type 1.

On the other hand, in a case where virtual machines in the corresponding VNF 8 only include a virtual machine to perform address translation classified into Type 1 and a virtual machine to perform address translation classified into Type 2, the identification unit 33 determines that address translation performed by the corresponding VNF 8 is Type 2. In the VNF 8h in FIG. 16, virtual machines arranged at boundaries are classified into the address translation type of Type 1, and a virtual machine arranged in a center is classified into the address translation type of Type 2. Therefore, the identification unit 33 determines that address translation performed by the VNF 8h is Type 2.

In a case where virtual machines in the corresponding VNF 8 only include a virtual machine to perform address translation classified into Type 1 and a virtual machine to perform address translation classified into Type 3, the identification unit 33 determines that address translation performed by the corresponding VNF 8 is Type 3. In the VNF 8i in FIG. 16, one of two virtual machines arranged at boundaries is classified into the address translation type of Type 1, and the other of the two virtual machines arranged at boundaries and a virtual machine arranged in a center are classified into the address translation type of Type 3. Therefore, the identification unit 33 determines that address translation performed by the VNF 8i is Type 3.

The identification unit 33 determines that, in the VNFs 8 of other combinations, the Type 4 address translation is performed. In, for example, the VNF 8j in FIG. 16, virtual machines arranged at boundaries are classified into the address translation type of Type 1, and a virtual machine arranged in a center is classified into the address translation type of Type 4. Therefore, the identification unit 33 determines that address translation performed by the VNF 8j is Type 4. The VNF 8k includes a virtual machine classified into Type 4, a virtual machine classified into Type 1, and a virtual machine classified into Type 2. Therefore, the identification unit 33 determines that address translation performed by the VNF 8k is Type 4. In the same way, since the VNF 8m includes a virtual machine classified into Type 3, a virtual machine classified into Type 1, and a virtual machine classified into Type 2. Therefore, the identification unit 33 determines that address translation performed by the VNF 8m is Type 4.

The identification unit 33 records the kind of address translation identified for each of the VNFs 8, in the field of the VNF in the address translation type table 42 (FIG. 15). Note that the identification unit 33 may arbitrarily notify the corresponding management device 50 of a result of identifying the kind of address translation for each of the VNFs 8. In this case, the acquisition unit 62 in the corresponding management device 50 records, in the field of the VNF in the address translation type table 72, identifiers of the VNFs that provide functions included in the field of the network function in the address translation type table 72.

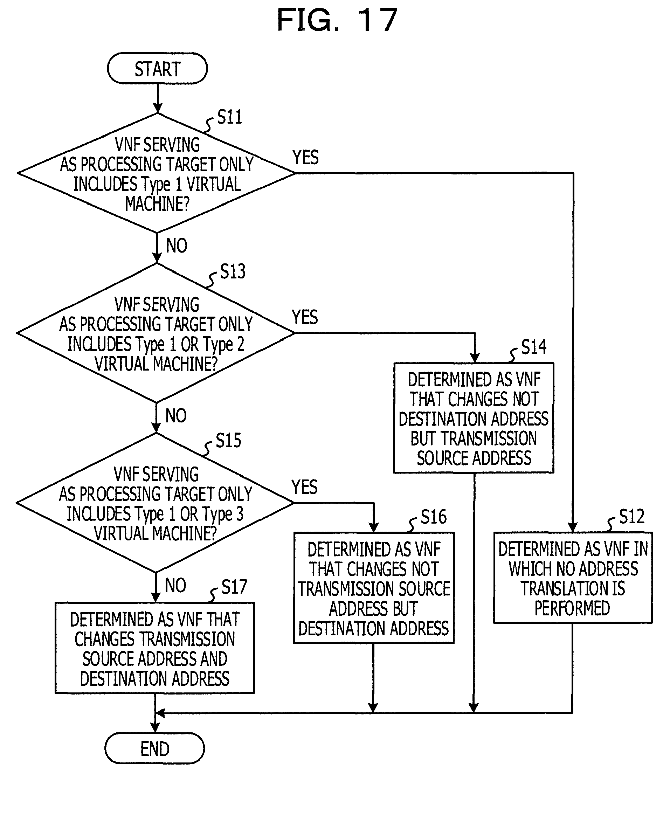

FIG. 17 is a flowchart for explaining an example of a determination method for an address translation type. Note that FIG. 17 is an example and an order in which determination operations in, for example, steps S11, S13, and S15 are performed may be arbitrarily changed in accordance with implementation.

The identification unit 33 determines whether the VNF 8 serving as a processing target only includes a Type 1 virtual machine (step S11). In a case where the VNF 8 serving as a processing target only includes a Type 1 virtual machine, the identification unit 33 determines that no address translation is performed by the VNF 8 serving as a processing target (step S11: Yes, step S12). In other words, the identification unit 33 determines that the kind of address translation performed by the VNF 8 serving as a processing target is Type 1.

In a case where the VNF 8 serving as a processing target includes a virtual machine other than that of Type 1, the identification unit 33 determines whether the VNF 8 serving as a processing target only includes a Type 1 or Type 2 virtual machine (step S11: No, step S13). In a case where the VNF 8 serving as a processing target only includes a Type 1 or Type 2 virtual machine, the identification unit 33 determines that the VNF 8 serving as a processing target is one of the VNFs 8, which changes not a destination address but a transmission source address (step S13: Yes, step S14). In other words, the identification unit 33 determines that the kind of address translation performed by the VNF 8 serving as a processing target is Type 2.

In a case where the VNF 8 serving as a processing target includes a virtual machine than that of Type 1 or Type 2, the identification unit 33 determines whether the VNF 8 serving as a processing target only includes a Type 1 or Type 3 virtual machine (step S13: No, step S15). In a case where the VNF 8 serving as a processing target only includes a Type 1 or Type 3 virtual machine, the identification unit 33 determines that the VNF 8 serving as a processing target is one of the VNFs 8, which changes not a transmission source address but a destination address (step S15: Yes, step S16). In other words, the identification unit 33 determines that the kind of address translation performed by the VNF 8 serving as a processing target is Type 3.

It is assumed that, in step S15, it is determined that the VNF 8 serving as a processing target includes a virtual machine other than the Type 1 or Type 3 virtual machine (step S15: No). In this case where, the identification unit 33 determines that the VNF 8 serving as a processing target is one of the VNFs 8, which changes a transmission source address and a destination address (step S17). In other words, the identification unit 33 determines that the kind of address translation performed by the VNF 8 serving as a processing target is Type 4.

### (2) Assignment of Addresses in Control Device 20

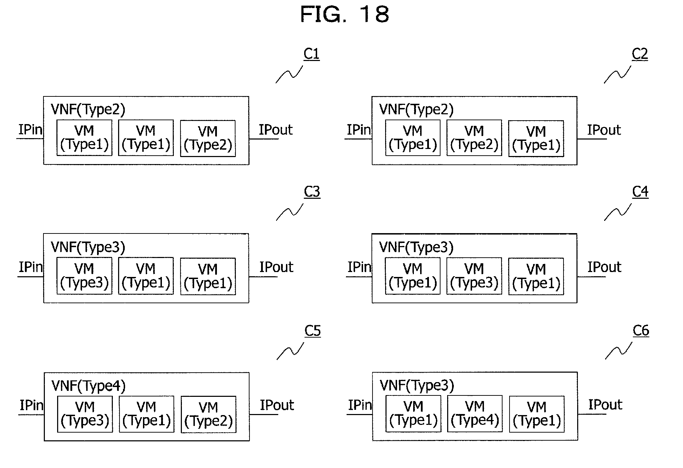

FIG. 18 is a diagram for explaining an example of a method for assignment of addresses. In accordance with a result of the identification processing in the identification unit 33, the assignment unit 34 assigns addresses to the VNFs 8. The assignment unit 34 assigns, to each of the VNFs 8, a reception address (IPin), used in a case where the relevant VNF 8 receives a packet from another one of the VNFs 8 or the like, and a transmission address (IPout), used in a case where the relevant VNF 8 transmits a packet to another one of the VNFs 8 or the like.

Next, in accordance with the address translation type of the VNF 8 serving as a processing target and a coupling relationship between virtual machines in the VNF 8 serving as a processing target, the assignment unit 34 determines whether to assign an address other than the reception address (IPin) or the transmission address (IPout). The assignment unit 34 does not assign, to one of the VNFs 8 in which, for example, Type 1 address translation is performed, an address other than the reception address (IPin) or the transmission address (IPout).

As illustrated in cases C1 and C2 in FIG. 18, the VNF 8 to perform the Type 2 address translation changes a transmission source address of a packet to be transferred. Hereinafter, an address set as a transmission source of a packet transmitted by the VNF 8 to perform the Type 2 address translation is described as a "transmission setting address" in some cases. If the path information generation unit 35 is able to generate path information for an output-side port of a virtual machine to perform address translation, it is possible to perform transfer processing of a packet, which uses the service chain 7, in the VNF 8 to perform the Type 2 address translation. In other words, if the assignment unit 34 is able to set the transmission setting address for the VNF 8 to perform the Type 2 address translation, communication utilizing the service chain 7 becomes available. Note that in a case where the communication device 5 serving as a destination in the service chain 7 transmits a packet to the communication device 5 serving as a transmission source, the transmission setting address assigned to one of the VNFs 8 is used as a destination of the packet to be terminated by the relevant VNF 8.

As illustrated in the case C1, in a case where a virtual machine to perform the Type 2 address translation is located at an output-side boundary of the corresponding VNF 8, the transmission address (IPout) is assigned to an output-side port of the virtual machine to perform the address translation. In this case, since, in the control device 20, it is possible to perform path calculation up to IPout, the assignment unit 34 assigns no transmission setting address to the VNF 8 illustrated in the case C1. Note that it may be said that, in the case C1, the transmission address (IPout) doubles as the transmission setting address.

On the other hand, as illustrated in the case C2, it is assumed that a virtual machine to perform the Type 2 address translation is not located at an output-side boundary of the corresponding VNF 8. In this case, none of the reception address (IPin) and the transmission address (IPout) are assigned to an output-side port of the virtual machine to perform the address translation. Therefore, by assigning the transmission setting address to the VNF 8 illustrated in the case C2, the assignment unit 34 enables path calculation up to an address to be performed in the control device 20, the address being assigned to the virtual machine to perform the address translation.

As illustrated in cases C3 and C4, the VNF 8 to perform the Type 3 address translation changes a destination address of a packet to be transferred. Hereinafter, an address set as a destination of a packet transmitted to the VNF 8 to perform the Type 3 address translation is described as a "destination setting address" in some cases. If the path information generation unit 35 is able to generate path information for an input-side port of a virtual machine to perform address translation, it is possible to perform transfer processing of a packet, which uses the service chain 7, in the VNF 8 to perform the Type 3 address translation. In other words, if the assignment unit 34 is able to set the destination setting address for the VNF 8 to perform the Type 3 address translation, communication utilizing the service chain 7 becomes available. Note that in a case where the communication device 5 serving as a transmission source in the service chain 7 transmits a packet to the communication device 5 serving as a destination, the destination setting address assigned to one of the VNFs 8 is used as a destination of the packet to be terminated by the relevant VNF 8.

As illustrated in the case C3, in a case where a virtual machine to perform the Type 3 address translation is located at an input-side boundary of the corresponding VNF 8, the reception address (IPin) is assigned to an input-side port of the virtual machine to perform the address translation. In this case, since, in the control device 20, it is possible to perform path calculation up to IPin, the assignment unit 34 assigns no destination setting address to the VNF 8 illustrated in the case C3. Note that it may be said that, in the case C3, the reception address (IPin) doubles as the reception setting address.

On the other hand, as illustrated in the case C4, it is assumed that a virtual machine to perform the Type 3 address translation is not located at an input-side boundary of the corresponding VNF 8. In this case, none of the reception address (IPin) and the transmission address (IPout) are assigned to an input-side port of the virtual machine to perform the address translation. Therefore, by assigning the destination setting address to the VNF 8 illustrated in the case C4, the assignment unit 34 enables path calculation up to an address to be performed in the control device 20, the address being assigned to the virtual machine to perform the address translation.

As illustrated in cases C5 and C6, the VNF 8 to perform the Type 4 address translation changes a destination address and a transmission source address of a packet to be transferred. Therefore, in the VNF 8 to perform the Type 4 address translation, path information for an input-side port of a virtual machine to perform translation of a destination address and path information for an output-side port of a virtual machine to perform translation of a transmission source address are desired to be calculated in the path information generation unit 35.

As illustrated in the case C5, in a case where the virtual machine to translate the destination address of a packet is located at an input-side boundary of the corresponding VNF 8, the reception address (IPin) is assigned to an input-side port of the virtual machine to perform the address translation. Therefore, the assignment unit 34 assigns no destination setting address to the VNF 8 illustrated in the case C5. Furthermore, in the case C5, the virtual machine to translate the transmission source address of a packet is located at an output-side boundary of the corresponding VNF 8. In this case, the transmission address (IPout) is assigned to an output-side port of the virtual machine to perform the address translation. Therefore, the assignment unit 34 assigns no transmission setting address to the VNF 8 illustrated in the case C5.

As illustrated in the case C6, in a case where the virtual machine to translate the destination address of a packet is not located at an input-side boundary of the corresponding VNF 8, the reception address (IPin) is not assigned to an input-side port of the virtual machine to perform the address translation. Therefore, the assignment unit 34 assigns the destination setting address to the VNF 8 illustrated in the case C6. Furthermore, in the case C6, the virtual machine to translate the transmission source address of a packet is not located at an output-side boundary of the corresponding VNF 8. Therefore, in the case C6, the transmission address (IPout) is not assigned to an output-side port of the virtual machine to perform the address translation. Therefore, the assignment unit 34 assigns the transmission setting address to the VNF 8 illustrated in the case C6.

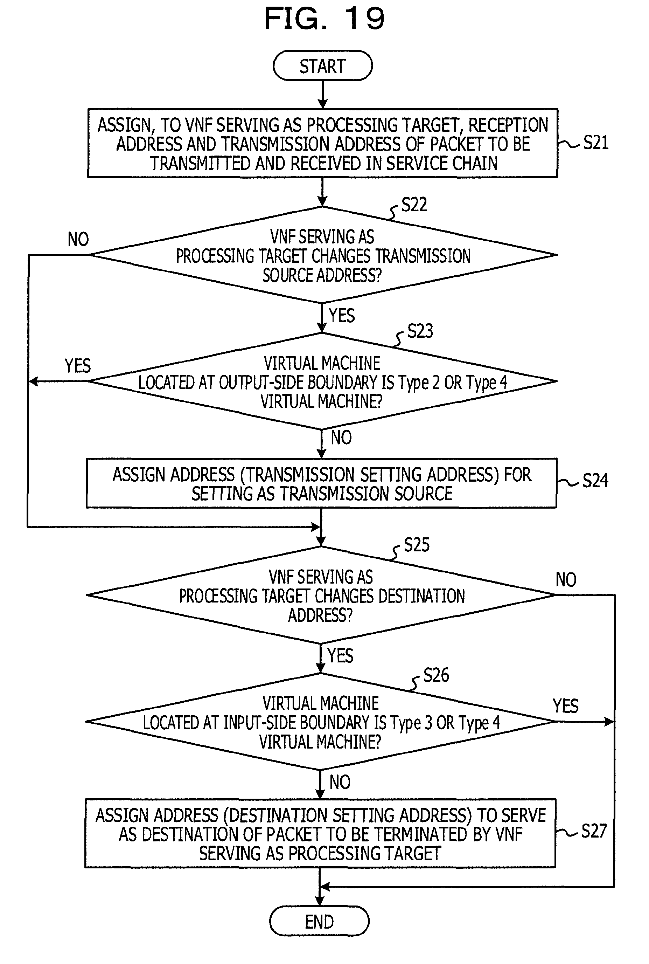

FIG. 19 is a flowchart for explaining an example of a method for assignment of addresses. Note that FIG. 19 is an example and processing may be arbitrarily changed in accordance with implementation in such a way as to perform processing operations in steps S25 to S27 before processing operations in steps S22 to S24.

The assignment unit 34 assigns, to the VNF 8 serving as a processing target, a reception address and a transmission address of a packet to be transmitted and received in the service chain 7 (step S21). The assignment unit 34 determines whether the VNF 8 serving as a processing target changes a transmission source address (step S22). In a case where the VNF 8 serving as a processing target changes the transmission source address, the assignment unit 34 determines whether a virtual machine located at an output-side boundary is a Type 2 or Type 4 virtual machine (step S22: Yes, step S23). In a case where the virtual machine located at an output-side boundary is not a Type 2 or Type 4 virtual machine, the assignment unit 34 assigns, to the VNF 8 serving as a processing target, an address (transmission setting address) for setting as a transmission source in processing in the corresponding VNF 8 (step S23: No, step S24).

Next, the assignment unit 34 determines whether the VNF 8 serving as a processing target changes a destination address (step S25). In a case where the VNF 8 serving as a processing target changes the destination address, the assignment unit 34 determines whether a virtual machine located at an input-side boundary is a Type 3 or Type 4 virtual machine (step S25: Yes, step S26). In a case where the virtual machine located at an input-side boundary is not a Type 3 or Type 4 virtual machine, the assignment unit 34 assigns, to the VNF 8 serving as a processing target, an address (destination setting address) to serve as a destination of a packet to be terminated in processing in the corresponding VNF 8 (step S26: No, step S27).

Note that in a case where the VNF 8 serving as a processing target does not change the transmission source address (step S22: No), processing operations in and subsequent to step S25 are performed. In addition, in a case where the VNF 8 serving as a processing target changes the transmission source address and the virtual machine located at an output-side boundary is a Type 2 or Type 4 virtual machine (step S23: Yes), the processing operations in and subsequent to step S25 are performed.

Furthermore, in a case where the VNF 8 serving as a processing target does not change the destination address (step S25: No), the assignment unit 34 ends the processing. In addition, in a case where the VNF 8 serving as a processing target changes the destination address and the virtual machine located at an input-side boundary is a Type 3 or Type 4 virtual machine (step S26: Yes), the assignment unit 34 ends the processing.

### (3) Path Calculation in Control Device 20

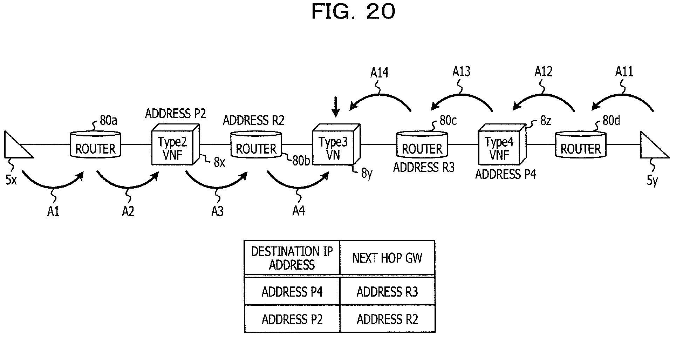

FIG. 20 is a diagram for explaining an example of a setting method for a path. In order to use a path calculated by the path calculation unit 32, the path information generation unit 35 generates pieces of transfer information to be set in relay devices such as routers 80 and virtual machines, located in the path. It is assumed that, in order to transfer a packet, for example, from a communication device 5x to a communication device 5y, the path calculation unit 32 determines that a path of a router 80a, the VNF 8x, a router 80b, a VNF 8y, a router 80c, a VNF 8z, and a router 80d is to be used. Hereinafter, an example of processing in a case of determining a piece of path information to be set in the VNF 8y will be described.

By arbitrarily using the information of the address translation type table 42, the path information generation unit 35 obtains, for each of devices, path information for using the path calculated by the path calculation unit 32. In the example of FIG. 20, it is assumed that, in processing for transferring a packet in a direction from the communication device 5x to the communication device 5y, the VNF 8x, the VNF 8y, and the VNF 8z perform the Type 2 address translation, the Type 3 address translation, and the Type 4 address translation, respectively.

In order to determine a transfer information path, the path information generation unit 35 traces in a direction opposite to a transfer direction of the packet, thereby determining whether the VNF 8 of Type 3 or Type 4 exists between the VNF 8 serving as a target in which the path is to be set and the communication device 5 serving as a destination. In a case where the VNF 8 of Type 3 or Type 4 exists between the VNF 8 serving as a target in which the path is to be set and the communication device 5 serving as a destination, a destination address is changed in the relevant VNF 8. Therefore, the VNF 8 serving as a target of a setting of the path sets a transfer destination of the packet to a destination setting address assigned to the VNF 8 of Type 3 or Type 4 reached by the packet until the packet reaches the communication device 5 serving as a destination. In a case of calculating a transfer path in the VNF 8y regarding the packet transferred, for example, from the communication device 5x toward the communication device 5y, the path information generation unit 35 traces a transfer path of the packet in an opposite direction from the communication device 5y to the VNF 8y, as illustrated by arrows A11 to A14. Based on this processing, the path information generation unit 35 identifies that the destination address is changed in the VNF 8z before reaching the VNF 8y, starting from the communication device 5y.

In a case where the destination setting address is set in the VNF 8z, the path information generation unit 35 determines that the destination address of the packet to be transferred from the VNF 8y toward the communication device 5y is the destination setting address assigned to the VNF 8z. Here, it is assumed that an address of "P4" is assigned to the VNF 8z as the destination setting address. Furthermore, it is assumed that communication between the VNF 8y and the VNF 8z is relayed by the router 80c and an address of "R3" is assigned to the router 80c. Then, the path information generation unit 35 determines that the VNF 8y transfers, to the router 80c, a packet addressed to the address of "P4", and the path information generation unit 35 determines, as the path information for the VNF 8y, transferring of the packet addressed to the address of "P4" to the address of "R3".

The path information generation unit 35 performs setting processing of transfer information of a packet to be sent from the communication device 5 serving as a destination of the packet to the communication device 5 serving as a transmission source thereof in the service chain 7. The path information generation unit 35 traces the path of the packet in the transfer direction, thereby determining whether the VNF 8 of Type 2 or Type 4 exists, in the service chain 7, between the communication device 5 serving as a transmission source and the VNF 8 serving as a target in which the path is to be set. In a case where the packet is transmitted to the communication device 5z by the communication device 5x serving as a transmission source in the service chain 7, the transmission source address is changed in the VNF 8 of Type 2 or Type 4 between the communication device 5x serving as a transmission source and the VNF 8 serving as a target in which the path is to be set. Therefore, in a path whose direction is opposite to the service chain 7, the VNF 8 serving as a setting target of path information sets a transfer destination of the packet to a transmission setting address assigned to the VNF 8 of Type 2 or Type 4 located between the VNF 8 serving as a setting target of path information and the communication device 5x serving as a transmission source in the service chain 7. In a case of calculating a transfer path in the VNF 8y regarding the packet transferred, for example, from the communication device 5y toward the communication device 5x, the path information generation unit 35 traces, in the service chain 7, the transfer path of the packet from the communication device 5x to the VNF 8y, as illustrated by arrows A1 to A4. Based on this processing, the path information generation unit 35 identifies that the transmission source address is changed in the VNF 8x before reaching the VNF 8y, starting from the communication device 5x.

In a case where the transmission setting address is set in the VNF 8x, the path information generation unit 35 determines that the destination address of a packet to be transferred from the VNF 8y toward the communication device 5x is the transmission setting address assigned to the VNF 8x. Here, it is assumed that an address of "P2" is assigned to the VNF 8x as the transmission setting address. Furthermore, it is assumed that communication between the VNF 8y and the VNF 8x is relayed by the router 80b and an address of "R2" is assigned to the router 80b. Then, the path information generation unit 35 determines that the VNF 8y transfers, to the router 80b, a packet addressed to the address of "P2", and the path information generation unit 35 determines, as the path information for the VNF 8y, transferring of the packet addressed to the address of "P2" to the address of "R2".

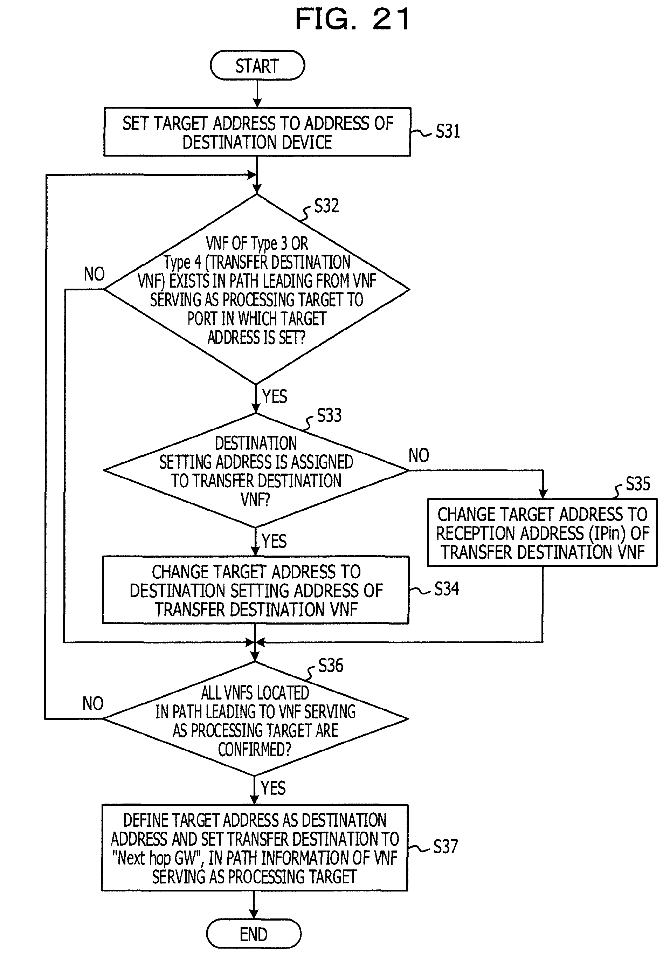

FIG. 21 is a flowchart for explaining an example of a determination method for path information from a transmission source towards a destination in the service chain 7. The path information generation unit 35 sets a target address to an address of the communication device 5 serving as a destination in the service chain 7 (step S31). Here, the target address is an address assumed as a destination address of a packet to be transferred by the VNF 8 serving as a processing target of a path setting. The path information generation unit 35 determines whether the VNF 8 of Type 3 or Type 4 exists in a path leading from the VNF 8 serving as a processing target to a port in which the target address is set (step S32). In the description of FIG. 21, the VNF 8 of Type 3 or Type 4 located in the path leading from the VNF 8 serving as a processing target to the port in which the target address is set is described as a "transfer destination VNF". In a case where the transfer destination VNF exists, the path information generation unit 35 determines whether a destination setting address is assigned to the transfer destination VNF (step S32: Yes, step S33). In a case where the destination setting address is assigned to the transfer destination VNF, the path information generation unit 35 changes the target address to the destination setting address of the transfer destination VNF (step S33: Yes, step S34). In a case where the destination setting address is not assigned to the transfer destination VNF, the path information generation unit 35 changes the target address to the reception address (IPin) of the transfer destination VNF (step S33: No, step S35). On the other hand, in a case where no transfer destination VNF exists, the path information generation unit 35 does not change the target address (step S32: No).

The path information generation unit 35 determines whether all the VNFs 8 located in a path leading to the VNF 8 serving as a processing target are processed (step S36). In a case where all the VNFs 8 located in the path leading to the VNF 8 serving as a processing target are not processed, the path information generation unit 35 repeats processing operations in and subsequent to step S32 (step S36: No). In a case where all the VNFs 8 located in the path leading to the VNF 8 serving as a processing target are processed, the path information generation unit 35 sets, in the path information of the VNF serving as a processing target, a transfer destination to "Next hop GW" while defining the target address as a destination address (step S36: Yes, step S37).

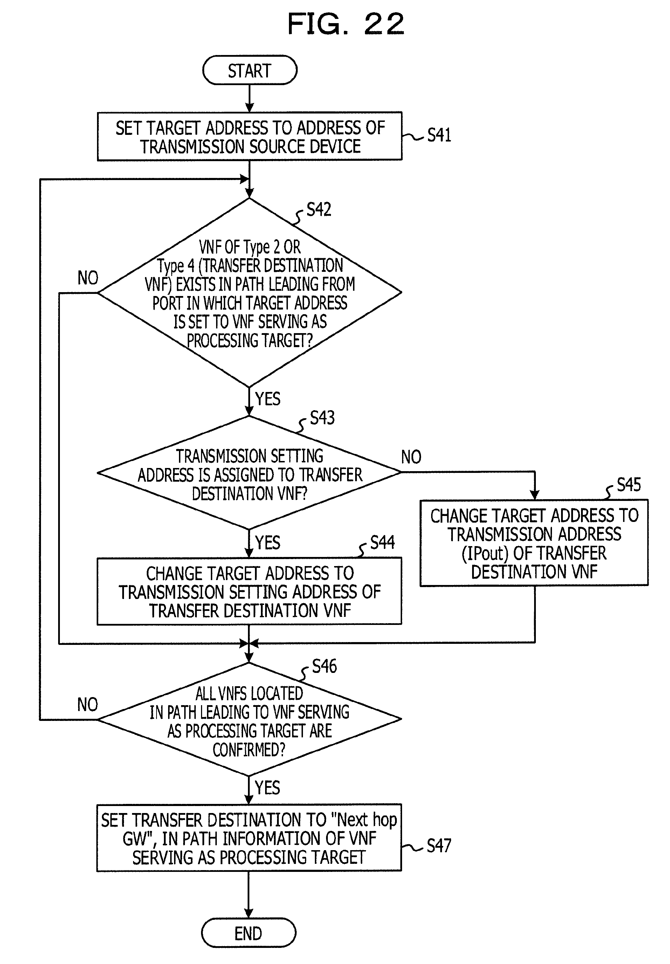

FIG. 22 is a flowchart for explaining an example of a determination method for path information from a destination towards a transmission source in the service chain 7. The path information generation unit 35 sets a target address to an address of the communication device 5 serving as a transmission source in the service chain 7 (step S41). The path information generation unit 35 determines whether the VNF 8 of Type 2 or Type 4 exists in a path leading from a port in which the target address is set to the VNF 8 serving as a processing target (step S42). In the description of FIG. 22, the VNF 8 of Type 2 or Type 4 located in the path leading from the port in which the target address is set to the VNF 8 serving as a processing target is described as a "transfer destination VNF". In a case where the transfer destination VNF exists, the path information generation unit 35 determines whether a transmission setting address is assigned to the transfer destination VNF (step S42: Yes, step S43). In a case where the transmission setting address is assigned to the transfer destination VNF, the path information generation unit 35 changes the target address to the transmission setting address of the transfer destination VNF (step S43: Yes, step S44). In a case where the transmission setting address is not assigned to the transfer destination VNF, the path information generation unit 35 changes the target address to the transmission address (IPout) of the transfer destination VNF (step S43: No, step S45). On the other hand, in a case where no transfer destination VNF exists, the path information generation unit 35 does not change the target address (step S42: No).

The path information generation unit 35 determines whether all the VNFs 8 located in a path leading to the VNF 8 serving as a processing target are processed (step S46). In a case where all the VNFs 8 located in the path leading to the VNF 8 serving as a processing target are not processed, the path information generation unit 35 repeats processing operations in and subsequent to step S42 (step S46: No). In a case where all the VNFs 8 located in the path leading to the VNF 8 serving as a processing target are processed, the path information generation unit 35 sets, in the path information of the VNF serving as a processing target, a transfer destination to "Next hop GW" while defining the target address as a destination address (step S46: Yes, step S47).

Upon finishing a setting of the path information, the path information generation unit 35 notifies, via the transmission unit 21, the corresponding management device 50 of information of the VNFs 8 managed by the relevant management device 50. The information of which the corresponding management device 50 is notified by the control device 20 includes a reception address (IPin), a transmission address (IPout), a destination setting address, a transmission setting address, and path information. Note that in a case where the corresponding management device 50 manages the VNFs 8, information of identifiers of the respective VNFs 8 is included in the notification information. In addition, the destination setting address and the transmission setting address are given notice of only for each of the VNFs 8 to which these addresses are assigned.

### (4) Assignment of Addresses in Management Device 50

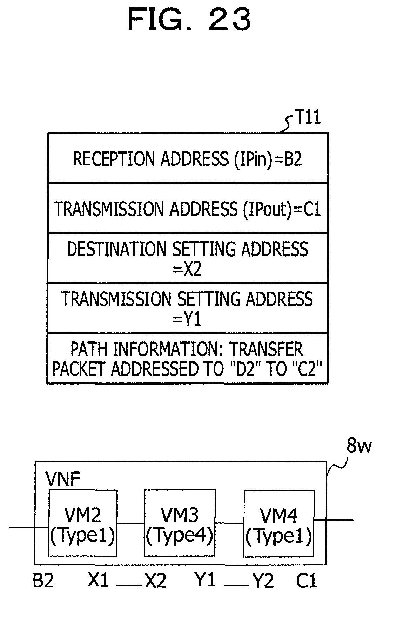

FIG. 23 is a diagram for explaining an example of a method for assignment of addresses. Hereinafter, a case where the control device 20 transmits, to the corresponding management device 50, a control packet including notification information illustrated in a table T11 will be adopted as an example, and processing in the corresponding management device 50 will be described.

The acquisition unit 62 in the corresponding management device 50 acquires, via the reception unit 52, the notification information from the control device 20. The acquisition unit 62 recognizes that the following addresses are assigned to the VNF 8 serving as a target of processing in the corresponding management device 50 and that a packet addressed to "D2" is to be transferred to "C2".
reception address (IPin) = B2
transmission address (IPout) = C1
destination setting address = X2
transmission setting address = Y1

On the other hand, by using the topology table 71, the path calculation unit 61 generates a path for transferring, to "C2", the packet addressed to "D2" by use of virtual machines in the corresponding VNF 8. In an example of a VNF 8w in FIG. 23, it is assumed that a VM 2 is located at a boundary on a receiving side of the packet and a path through which the packet is transferred from the VM 2 to a VM 4 via a VM 3 is calculated. Here, it is assumed that the VM 2 and the VM 4 are the Type 1 virtual machines and the VM 3 is the Type 4 virtual machine.

In the corresponding VNF 8, the assignment unit 63 assigns the reception address IPin to an interface to be used for receiving the packet transmitted by the communication device 5 serving as a transmission source in the service chain 7. Note that the interface used for receiving the packet transmitted by the communication device 5 serving as a transmission source in the service chain 7 is an input-side interface of a virtual machine installed at an input-side boundary. In a case of the VNF 8w in FIG. 23, "B2" given notice of as the reception address is assigned to a port that is to be used for communication with a device no included in the VNF 8w and that is included in the VM 2.

The assignment unit 63 assigns the transmission address IPout to an interface that is to be used for transmitting the packet transmitted by the communication device 5 serving as a transmission source in the service chain 7 and that is included in the corresponding VNF 8. Note that the interface that is used for transmitting the packet transmitted by the communication device 5 serving as a transmission source in the service chain 7 is an output-side interface of a virtual machine installed at an output-side boundary. In a case of the VNF 8w in FIG. 23, "C1" given notice of as the transmission address is assigned to a port that is to be used for communication with a device no included in the VNF 8w and that is included in the VM 4.

The assignment unit 63 identifies a Type 3 or Type 4 virtual machine that is nearest to an input side of the packet transmitted by the communication device 5 serving as a transmission source in the service chain 7 and that is included in the corresponding VNF 8. The assignment unit 63 assigns the destination setting address to a virtual interface on an input-side of the packet headed to a destination in the service chain 7 and that is included in the identified virtual machine. Note that the destination setting address may be assigned as a Loopback address of the identified virtual machine. In a case of the VNF 8w in FIG. 23, "X2" given notice of as the destination setting address is assigned to a port that is located on an input side of the VNF 8w and that is included in the VM 3.

The assignment unit 63 identifies a Type 2 or Type 4 virtual machine that is nearest to an output side of the packet transmitted by the communication device 5 serving as a transmission source in the service chain 7 and that is included in the corresponding VNF 8. The assignment unit 63 assigns the transmission setting address to a virtual interface on an output-side of the packet headed to a destination in the service chain 7 and that is included in the identified virtual machine. Note that the transmission setting address may be assigned as a Loopback address of the identified virtual machine. In a case of the VNF 8w in FIG. 23, "Y1" given notice of as the transmission setting address is assigned to a port that is located on an output side of the VNF 8w and that is included in the VM 3.

Furthermore, the assignment unit 63 assigns an address to be used for communication within the corresponding VNF 8. In, for example, the VNF 8w, "X1" is assigned to an output-side port of the VM 2, and "Y2" is assigned to an input-side port of the VM 4.

If the assignment of addresses finishes, the path determination unit 64 generates path information for communication within the corresponding VNF 8. At this time, a path calculated by the path determination unit 64 includes path information for reaching the destination setting address. In, for example, the VNF 8w, path information for reaching "X2" serving as the destination setting address is set. In other words, for the VM 2, it is determined that a packet addressed to "X2" is to be transferred to "X2".

In the same way, the path determination unit 64 generates a path for transferring a packet transmitted to the communication device 5 on a transmitting side by the communication device 5 on a destination side in the service chain 7. At this time, a path calculated by the path determination unit 64 includes path information for reaching the transmission setting address. In, for example, the VNF 8w, path information for reaching "Y1" serving as the transmission setting address is set. In other words, for the VM 4, it is determined that a packet addressed to "Y1" is to be transferred to "Y1". The path determination unit 64 notifies individual virtual machines of the determined pieces of path information via the transmission unit 51.

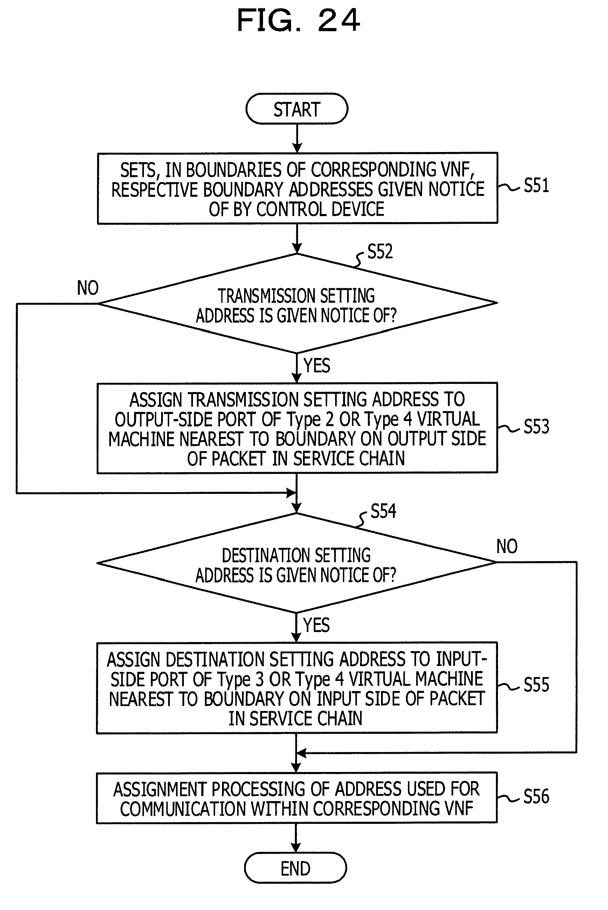

FIG. 24 is a flowchart for explaining an example of a method for assignment of addresses. The assignment unit 63 sets, in boundaries of the corresponding VNF 8, respective boundary addresses assigned by the control device 20 (step S51). Note that the respective boundary addresses are a reception address and a transmission address. The assignment unit 63 determines whether the transmission setting address is given notice of (step S52). In a case where the transmission setting address is given notice of, the assignment unit 63 assigns the transmission setting address to an output-side port of a Type 2 or Type 4 virtual machine nearest to a boundary on an output side of a packet in the service chain 7 (step S52: Yes, step S53). In a case where, based on the processing operation in step S53, for example, a transmission source address of the packet is changed more than once, the transmission setting address turns out to be set in a virtual machine that performs changing to a transmission source address to be set in the packet output by the corresponding VNF 8.

After step S53 or in a case of being determined as "NO" in step S52, the assignment unit 63 determines whether the destination setting address is given notice of (step S54). In a case where the destination setting address is given notice of, the assignment unit 63 assigns the destination setting address to an input-side port of a Type 3 or Type 4 virtual machine nearest to a boundary on an input side of the packet in the service chain 7 (step S54: Yes, step S55). In a case where, based on the processing operation in step S55, a destination address of the packet is changed more than once, the destination setting address turns out to be set in a virtual machine that terminates the packet input to the corresponding VNF 8. After step S55 or in a case of being determined as "NO" in step S54, the assignment unit 63 performs assignment processing of another address to be used for communication of the corresponding VNF 8.

As described with reference to FIG. 23, in the system according to an embodiment, a path to lead to the destination setting address or the transmission setting address is generated. Therefore, in the corresponding VNF 8, it is possible to transfer a packet whose destination is set to the destination setting address or the transmission setting address, to a virtual machine to which the address is assigned. In other words, it turns out that the control device 20 assigns, to the VNF 8 to perform address translation, an address to be used as a destination of a packet to be terminated by the relevant VNF 8. Furthermore, as described with reference to FIG. 20 to FIG. 22, regarding the VNF 8 to which the destination setting address or the transmission setting address is assigned, the control device 20 generates, as path information, a path to lead to the destination setting address or the transmission setting address, and the control device 20 transmits the path information to the management device 50 of each of the VNFs 8. Therefore, in the system according to an embodiment, addresses used for communication between the VNFs 8 and addresses used for communication within each of the VNFs 8 are separately managed, and even if an address of a packet is changed in the corresponding VNF 8, communication is normally performed.

### Others

Note that an embodiment is not limited to the above-mentioned embodiment and may be variously modified. Hereinafter, some of examples thereof will be described.

In the above description, in order to improve visualization of drawings, the control device 20, the management devices 50, connections used for communication of the control device 20 and the management devices 50, and so forth are not described in a network. However, the control device 20 is able to communicate with all the management devices 50 within the network. In addition, each of the management devices 50 is able to communicate with individual virtual machines within the VNFs 8 serving as management targets of the relevant management device itself. Note that each of the management devices 50 is able to manage an arbitrary number of the VNFs 8.

Information elements, included in tables and so forth and used in the above description, are examples and may be arbitrarily changed in accordance with implementation.

In a flowchart such as FIG. 19, a case where no transmission setting address is assigned if a virtual machine located at an output-side boundary is a Type 2 or Type 4 virtual machine is adopted as an example and described. However, the transmission setting address may be set to the same value as that of a transmission address of the corresponding VNF 8. In the same way, in a case where a virtual machine located at an input-side boundary of the corresponding VNF 8 is a Type 3 or Type 4 virtual machine, the destination setting address may be set to the same value as that of a reception address of the corresponding VNF 8.

Furthermore, in a case where the control device 20 does not recognize arrangement of virtual machines in the corresponding VNF 8, the assignment unit 34 may assign, to the corresponding VNF 8 including a Type 2 virtual machine, an address different from each of the reception address and the transmission address, as the transmission setting address. In this case, the assignment unit 34 assigns, to the corresponding VNF 8 including a Type 3 virtual machine, an address different from each of the reception address and the transmission address, as the destination setting address. In the same way, the assignment unit 34 assigns, to the corresponding VNF 8 including a Type 4 virtual machine, respective addresses different from each of the reception address and the transmission address, as the destination setting address and the transmission setting address. In this case, if a Type 2 or Type 4 virtual machine is a virtual machine located at an output-side boundary, the corresponding management device 50 sets the transmission setting address in an output-side port of a virtual machine located at an output-side boundary without using a transmission address. In the same way, if a Type 3 or Type 4 virtual machine is a virtual machine located at an input-side boundary, the corresponding management device 50 sets the destination setting address in an input-side port of a virtual machine located at an input-side boundary without using a reception address.

In this example of a modification, in a case where the control device 20 does not identify arrangement of virtual machines in each of the VNFs 8, assignment of addresses is performed. Therefore, the amount of information stored by the control device 20 is reduced.

## Claims

1. A management device in a communication system including a plurality of virtual machines that are classified into a plurality of virtual machine group, the management device comprising:
a control unit configured to assign each address, from among intra-group addresses that are used for communications within a managed virtual machine group of the plurality of virtual machine groups, to each managed virtual machine included in the managed virtual machine group; and
a communication unit configured to transmit each address assigned to each managed virtual machine included in the managed virtual machine group, wherein
the control unit is further configured to:
obtain from a control device, when the managed virtual machine group includes one or more specified virtual machines configured to perform address conversion for packets that pass through the managed virtual machine group, one or more addresses from among inter-group addresses that are used for communications among the plurality of virtual machine groups, and
assign the obtained one or more addresses to the one or more specified virtual machine respectively.

2. The management device according to claim 1, wherein
the obtained one or more addresses are assigned to at least one of a first interface and a second interface,
the first interface is an interface of a first specified virtual machine included in the one or more specified virtual machines, the first specified virtual machine configured to convert a source address of the packets and transmits the packets via first interface, and
the second interface is an interface of a second specified virtual machine included in the one or more specified virtual machines, the second specified virtual machine configured to receive the packets via the second interface and convert a destination address of the packets.

3. The management device according to claim 2, wherein
the first interface is not an output-side boundary interface of the managed virtual machine group, and
the second interface is not an input-side boundary interface of the managed virtual machine group.

4. The management device according to claim 1, wherein
the obtained one or more addresses are assigned to at least one of a third interface and a fourth interface,
the third interface is an opposite interface of the first interface, and the fourth interface is an opposite interface of the second interface.

5. A control device in a communication system including a plurality of virtual machines that are classified into a plurality of virtual machine group, the management device comprising:
a control unit configured to assign one or more addresses to a control device from among inter-group addresses when a managed virtual machine group of the plurality of virtual machine groups includes one or more specified virtual machines configured to perform address conversion for packets that passes through the managed virtual machine group, the control device configured to assign each address from among intra-group addresses to each managed virtual machine included in the managed virtual machine group, the control device configured to assign the one or more addresses to the one or more specified virtual machine respectively, the inter-group addresses used for communications among the plurality of virtual machine groups, the intra-group addresses used for communications within a managed virtual machine group of the plurality of virtual machine groups; and
a communication unit configured to transmit the one or more address to the control device.

6. A management method of a management device in a communication system including a plurality of virtual machines that are classified into a plurality of virtual machine group, the management method comprising:
assigning each address, from among intra-group addresses that are used for communications within a managed virtual machine group of the plurality of virtual machine groups, to each managed virtual machine included in the managed virtual machine group; and
transmitting each address assigned to each managed virtual machine included in the managed virtual machine group, wherein
when the managed virtual machine group includes one or more specified virtual machines configured to perform address conversion for packets that pass through the managed virtual machine group, one or more addresses are obtained, from a control device, from among inter-group addresses that are used for communications among the plurality of virtual machine groups, and
the obtained one or more addresses are assigned to the one or more specified virtual machine respectively.
